# EUROPÄISCHE PATENTSCHRIFT

(11) **EP 1 495 445 B1**
(45) Veröffentlichungstag und Bekanntmachung des Hinweises auf die Patenterteilung: **17.05.2006**
(21) Anmeldenummer: 03706575.2
(22) Anmeldetag: 25.02.2003
(51) Int. Cl.: G06T 1/00, G10L 19/00

(54) **VERFAHREN UND VORRICHTUNG ZUM EINBETTEN UND EXTRAHIEREN VON WASSERZEICHENINFORMATIONEN**
METHOD AND DEVICE FOR EMBEDDING WATERMARK INFORMATION AND METHOD AND DEVICE FOR EXTRACTING EMBEDDED WATERMARK INFORMATION
PROCEDE ET DISPOSITIF D'INSERTION D'INFORMATIONS DE FILIGRANAGE, PROCEDE ET DISPOSITIF D'EXTRACTION D'INFORMATIONS DE FILIGRANAGE INSEREES

(30) Priorität: 12.04.2002 DE 10216261
(43) Veröffentlichungstag der Anmeldung: 12.01.2005
(73) Patentinhaber: Fraunhofer-Gesellschaft zur Förderung der angewandten Forschung, 80636 München (DE)
(72) Erfinder: NEUBAUER, Christian, 90408 Nürnberg (DE); HERRE, Jürgen, 91054 Buckenhof (DE); KULESSA, Ralph, 90537 Feucht (DE); SIEBENHAAR, Frank, 90491 Nürnberg (DE); SPINNLER, Wolfgang, 91054 Erlangen (DE)
(74) Vertreter: Schoppe, Fritz
(86) Internationale Anmeldenummer: PCT/EP2003/001914
(87) Internationale Veröffentlichungsnummer: WO 2003/088146

(56) Entgegenhaltungen:
- NEUBAUER C ET AL: "Continuous steganographic data transmission USING UNCOMPRESSED AUDIO" INFORMATION HIDING. INTERNATIONAL WORKSHOP PROCEEDINGS, 14. April 1998 (1998-04-14), Seiten 208-217, XP002224416
- GARCIA R A: "Digital Watermarking of audio signals using a psychoacoustic auditory model and spread spectrum theory" PREPRINTS OF PAPERS PRESENTED AT THE AES CONVENTION, XX, XX, 24. September 1999 (1999-09-24), Seiten 1-42, XP002224419
- MORA-JIMENEZ L ET AL: "A new spread spectrum watermarking method with self-synchronization capabilities" PROC. IEEE INT. CONF. ON IMAGE PROC., Bd. 1, 10. September 2000 (2000-09-10), Seiten 415-418, XP010530639 Vancouver, Canada
- PATENT ABSTRACTS OF JAPAN vol. 2002, no. 06, 4. Juni 2002 (2002-06-04) & JP 2002 044408 A (INTERNATL BUSINESS MACH CORP), 8. Februar 2002 (2002-02-08)

## Beschreibung

Die vorliegende Erfindung bezieht sich auf das Gebiet des Wasserzeichenverarbeitens oder "Watermarking" und insbesondere auf Verfahren und Vorrichtungen zum Einbetten von Wasserzeicheninformationen bzw. zum Extrahieren von Wasserzeicheninformationen in ein Informationssignal, das Audio- und/oder Videoinformationen umfaßt.

Wasserzeichen für codierte und uncodierte Audiosignale und Videosignale sind inzwischen bekannt. Mit Wasserzeichen können Zusatzdaten robust und unhörbar oder nahezu unhörbar bzw. unsichtbar innerhalb eines Audiosignals bzw. Videosignals übertragen werden. Es existieren verschiedene Einbettungsverfahren je nach Format (uncodiert oder codiert), die so ausgestaltet werden können, daß sie nach dem gleichen Grundprinzip arbeiten und somit zueinander kompatibel sind. Hierbei unterscheidet man zwischen PCM-Wasserzeichen (PCM = Pulscode-Modulation), Bitstrom-Wasserzeichen-Verarbeitung und einem Verfahren, bei dem die Wasserzeicheneinbettung kombiniert zur Codierung stattfindet. Verschiedene Anwendungen für Wasserzeichen finden sich in der Fachveröffentlichung "Advanced Watermarking and its Applications", C. Neubauer, J. Herre, 109. AES-Convention, Los Angeles, September 2000, Preprint 5176.

Bei der klassischen Spread-Spectrum-Modulation, die für übliche Wasserzeicheneinbettungskonzepte verwendet wird, wird typischerweise eine BPSK (BPSK = Binary Phase Shift Keying = Binäre Phasenumtastung) oder QPSK (QPSK = Quaternary Phase Shift Keying = Quaternäre Phasenumtastung), also eine Phasenmodulation, eingesetzt. Die QPSK kommt aufgrund der Notwendigkeit komplexer Modulation bei Wasserzeichenverfahren eher selten zur Anwendung. Bei üblichen Spread-Spectrum-Konzepten mit BPSK-Modulation wird pro Spreizsequenz mit einer Anzahl von L sogenannten Chips ein Informationsbit pro Spreizsequenz bzw. Symbol übertragen. Bezüglich näherer Details wird auf das deutsche Patent DE 196 40 814 C1 verwiesen.

Im nachfolgenden wird auf einen Wasserzeichenextraktor eingegangen. Am Ausgang eines angepaßten Filters bzw. Matched-Filters des Wasserzeichenextraktors tauchen Korrelationsspitzen im Symbolabstand auf, deren Vorzeichen, d.h. deren Polarität, die Wasserzeicheninformation trägt. Entlang der Zeitachse entstehen im Korrelator, wenn der Signal/Rausch-Abstand ausreichend hoch ist, Korrelationsspitzen in regelmäßigem Abstand, die unterschiedliche Polaritäten haben, wobei eine Korrelationsspitze mit negativer Polarität auf einen logischen Zustand "0" des Informationsbits hinweisen, während Korrelationsspitzen mit einer positiven Polarität auf einen logischen Zustand "+1" des Informationsbits hinweisen oder umgekehrt.

Die Einbettung des Wasserzeichens kann auf verschiedene Art und Weise geschehen. Am Beispiel von Audiosignalen ist die Einbettung des Wasserzeichens in unkomprimierte Audiosignale, also Zeitaudiosignale in Form von zeitdiskreten aufeinanderfolgenden Abtastwerten bekannt. Hier wird darauf geachtet, daß die Energie der Wasserzeicheninformationen so geformt wird, daß sie unterhalb der akustischen Maskierungsschwelle liegt, so daß die Wasserzeicheninformationen nicht wahrnehmbar sind. In diesem Zusammenhang wird auf die Fachveröffentlichung "Digital Watermarking and its Influence on Audio Quality", C. Neubauer, J. Herre, 105. AES-Convention, San Francisco 1998, Preprint 4823, verwiesen. Allgemein wird so vorgegangen, daß zunächst eine Spreizsequenz bereitgestellt wird und in ihrer ursprünglichen Form belassen wird, wenn das Informationsbit einen logischen Zustand "+1" hat, bzw. invertiert wird, wenn das Informationsbit einen logischen Zustand "0" hat. Dies entspricht einer BPSK-Modulation. Die Spreizsequenz kann dann in den Frequenzbereich transformiert werden und unter Verwendung der psychoakustischen Maskierungsschwelle gewichtet werden, und zwar so, daß die Spektraldarstellung der Spreizsequenz einen Energieverlauf über der Frequenz hat, der mit der psychoakustischen Maskierungsschwelle übereinstimmt oder darunter liegt. Das solchermaßen gewichtete Wasserzeichen-Spektrum wird dann wieder in eine zeitliche Darstellung überführt, um eine psychoakustisch gewichtete zeitliche Darstellung der Spreizsequenz zu erhalten. In einem letzten Schritt wird dann die psychoakustisch gewichtete zeitliche Darstellung der Spreizsequenz zu dem zeitdiskreten Audiosignal hinzuaddiert, um ein Audiosignal mit unhörbaren eingebetteten Wasserzeicheninformationen zu erhalten. Alternativ kann das Audiosignal in den Frequenzbereich transformiert werden, und die Zusammenführung der psychoakustisch gewichteten Spreizsequenz und des im Frequenzbereich vorliegenden Audiosignals kann im Frequenzbereich stattfinden, um das Audiosignal mit eingebettetem Wasserzeichen bereits im Frequenzbereich zu erhalten, welches dann, nach einer Rücktransformation in den Zeitbereich, weiterverarbeitet werden kann.

Alternativ existieren Techniken zum Einbetten von Wasserzeichen in bereits komprimierte Audiosignale, wie es in der Fachveröffentlichung "Audio Watermarking of MPEG-2 AAC Bit Streams", C. Neubauer, J. Herre, 108. AES-Convention, Paris 2000, Preprint 5101, offenbart ist. Die Vorteile eines solchen Bitstrom-Wasserzeichenverfahrens sind einerseits eine niedrige Rechenkomplexität, da keine volle Decodierung des mit einem Wasserzeichen zu versehenden Bitstroms erfolgen muß, wobei insbesondere die Anwendung von Analyse- und Synthese-Filterbänken auf das Audiosignal im Wasserzeichen-Einbetter entfallen können. Andererseits kann eine hohe Audioqualität erreicht werden, da das Quantisierungsgeräusch und das Wasserzeichengeräusch genau aufeinander abgestimmt werden können. Die Einbettung in bereits komprimierte Audiosignale zeichnet sich auch durch eine hohe Robustheit aus, da das Wasserzeichen nicht durch einen nachfolgenden Audiocodierer "geschwächt" wird. Schließlich ermöglicht eine geeignete Wahl der Spreizbandparameter eine Kompatibilität zu den oben beschriebenen PCM-Wasserzeichenverfahren.

Wird das Audiosignal bereits während der Codierung desselben mit einem Wasserzeichen versehen, so ergibt sich ebenfalls eine niedrige Rechenkomplexität, da durch die Zusammenziehung von Wasserzeichen Einbettung und Codierung bestimmte Operationen, wie z.B. die Berechnung des Maskierungsmodells oder die Überführung des Audiosignals in eine spektrale Darstellung, nur einmal durchgeführt werden müssen. Auch in diesem Fall kann eine hohe Audioqualität sichergestellt werden, da das Quantisierungsgeräusch und das Wasserzeichengeräusch genau aufeinander abgestimmt werden können. Auch hier ergibt sich eine hohe Robustheit, da das Audiosignal nicht durch einen nachfolgenden Codierer geschwächt wird. Schließlich erlaubt auch hier eine geeignete Wahl der Spreizbandparameter eine Kompatibilität zum PCM-Wasserzeichenverfahren. In diesem Zusammenhang wird auf die Fachveröffentlichung "Combined Compression-Watermarking for Audio Signals", F. Siebenhaar, C. Neubauer, J. Herre 110. AES-Convention, Amsterdam, Preprint 5344, verwiesen.

Nachteilig an diesen verschiedenen Verfahren ist die Tatsache, daß sie lediglich eine relativ niedrige Datenrate erlauben, die zwar z. B. für einfache Urheberinformationen ausreichend ist, die jedoch dann, wenn z.B. von der klassischen Watermarking-Anwendung für Urheberinformationen weggegangen wird, schnell zu klein werden kann. Jedoch auch in den klassischen Anwendungsfällen ist die Datenrate manchmal zu gering, speziell dann, wenn eine sehr hohe Robustheit erreicht werden soll. Es existieren jedoch Anwendungen, bei denen sowohl eine hohe Datenrate als auch eine hohe Robustheit gleichzeitig nötig sind.

Zur Erhöhung der Datenrate wird in der Fachveröffentlichung "Robust, Multi-Functional and High-Quality Audio Watermarking Technology, M. van der Veen, u. a., 110. AES-Convention, 12.-15. Mai 2001, Amsterdam, Convention Paper 5345, vorgeschlagen nicht mehr die klassische PCM-Einbettungsstrategie zu verwenden. Hierzu wird ein Audiosignal mittels einer diskreten Fourier-Transformation in den Frequenzbereich transformiert. Für die Wasserzeicheneinbettung wird eine Zufallssequenz verwendet, die abhängig von Nutzinformationen, die auch als Payload bezeichnet werden, verschoben wird. Die zyklisch verschobene Version dieser Sequenz wird verwendet, um eine Multi-Bit-Payload mit einer speziellen Zufallssequenz zu implementieren. Jede mögliche Verschiebung kann einer Payload zugeordnet werden. Die abhängig von der Payload verschobene Zufallssequenz wird im Frequenzbereich gewichtet und dann in den Zeitbereich transformiert, um eine Zeitbereichsdarstellung der verschobenen Zufallssequenz zu erhalten.

Die im Zeitbereich vorliegende Wasserzeichendarstellung wird dann noch im Zeitbereich nachverarbeitet, um schließlich zu dem Audiosignal addiert zu werden, um ein Audiosignal mit Wasserzeichen im Zeitbereich zu erhalten. Zur Wasserzeichendetektion wird ein Abschnitt des Audiosignals in Frames segmentiert und in den Frequenzbereich transformiert. Jeder Frame wird in den Frequenzbereich transformiert und zur Vorverarbeitung vor der Extraktion einer spektralen Formung unterzogen. Diese Vorgehensweise wird mit einer Vielzahl von Segmenten durchgeführt, wobei die Vielzahl von Segmenten spektralwertweise akkumuliert werden. Der Inhalt des Akkumulators wird dann einer Kreuzkorrelation mit jeder möglichen verschobenen Version der Zufallssequenz unterzogen, wobei sich bei einer bestimmten Verschiebung eine Korrelationsspitze ergibt, deren Höhe ein Maß für die Detektionssicherheit ist, und deren Verschiebung relativ zu einem Null-Zeitpunkt die Nutzdateninformationen umfaßt.

Problematisch an dem beschriebenen Verfahren ist die Tatsache, daß der Null-Zeitpunkt, von dem ausgehend die Verschiebung bestimmt wird, im allgemeinen nicht a priori bekannt ist. Wird beispielsweise mit der Wasserzeichen-Extraktion irgendwann innerhalb des Audiosignal begonnen, so wäre es reiner Zufall, wenn das Segmentierungsraster genau getroffen würde. Darüber hinaus müssen Wasserzeichen robust gegenüber Angreifern sein, die Manipulationen am Audiosignal mit eingebettetem Wasserzeichen durchführen, um entweder Kopierinformationen in ihrem Sinne zu verändern, oder um auf illegale Art und Weise das Wasserzeichen zu entfernen. Ist ein Wasserzeichen-Extraktor nicht mehr in der Lage, den Null-Zeitpunkt, von dem ausgehend die Verschiebung berechnet wird, zu bestimmen, d.h. verliert der Extraktor die Synchronisation, so ist er aufgrund der inhärenten Eigenschaften der Puls-Phasen-Modulation nicht mehr in der Lage, Wasserzeicheninformationen fehlerfrei zu extrahieren.

Die Rachveröffentlichung "Continuous Steganographic Data Transmission Using Uncompressed Audio", C. Neubauer, J. Herre und K. Brandenburg, Information Hiding, International Workshop Proceedings, 14. April 1998, Seiten 208-217, beschreibt einen Codierer zum Einbetten von Wasserzeicheninformationen, der aus den drei Hauptkomponenten "Modulation", "Signalkonditionierung" und "Eingabe/Ausgabe" besteht. Bei der Modulation wird die einzubettende Information unter Verwendung eines BPSK-Spreaders auf eine Pseudo-Noise-Sequenz aufmoduliert und dann mittels eines Lokaloszillators hochgemischt. Bei der Signalkonditionierung wird eine Fourier-Transformation des hochgemischten Ausgangssignals des BPSK-Spreaders durchgeführt, um das erhaltene Spektrum spektral zu gewichten. Die spektrale Gewichtung findet unter Verwendung eines Psychoakustischen Maskierungsmodells statt, das von dem Audio-Eingangssignal gesteuert wird. Ferner wird das spektral gewichtete Signal einer inversen Fourier-Transformation unterzogen und zu dem ursprünglichen Audiosignal hinzuaddiert. Das erhaltene Audiosignal, in dem nunmehr das Wasserzeichen eingebettet ist, kann dann ausgegeben werden. Auf Decodiererseite sind ein Matched Filter, dessen Filterkoeffizienten von der ursprünglichen Datensequenz abhängen, ein Synchronisierer, eine Abtastvorrichtung, eine Schwellenentscheidungseinheit und zu Testzwecken ein Bitfehlermessgerät vorgesehen. Aufgrund der Korrelation des codierten Audiosignals mit dem Matched Filter erhält man einen Peak an dem Ausgang des Filters für jedes Zeitintervall. Die Entscheidungseinheit untersucht das Vorzeichen der Korrelationsspitze und gibt abhängig vom Vorzeichen eine "1" oder eine "0" aus.

Die Aufgabe der vorliegenden Erfindung besteht darin, ein robustes Wasserzeichenkonzept zu schaffen, das zugleich eine hohe Datenrate ermöglicht.

Diese Aufgabe wird durch eine Vorrichtung zum Einbetten von Wasserzeicheninformationen gemäß Anspruch 1, eine Vorrichtung zum Extrahieren von Wasserzeicheninformationen nach Anspruch 15, ein Verfahren zum Extrahieren von Wasserzeicheninformationen nach Anspruch 22 oder ein Computer-Programm nach Anspruch 23 oder 24 gelöst.

Der vorliegenden Erfindung liegt die Erkenntnis zugrunde, daß ein robustes Wasserzeichenkonzept, das zugleich eine hohe Datenrate erlaubt, dadurch erhalten wird, wenn die Wasserzeicheninformationen gemäß der Puls-Phasen-Modulation in den zeitlichen Abstand einer Datensequenz-Korrelationsspitze und einem Null-Zeitpunkt codiert werden, wobei jedoch für jede Datensequenz-Korrelationsspitze ebenfalls eine zusätzliche Synchronisationsfrequenz-Korrelationsspitze, die den "Null-Zeitpunkt" anzeigt veranlaßt wird, so daß der Decodierer für eine Datensequenz-Korrelationsspitze auch eine zugehörige Synchronisationssequenz-Korrelationsspitze extrahiert. Die Synchronisationsinformationen in Form der Synchronisationssequenz-Korrelationsspitze werden somit ebenfalls laufend in das Informationssignal eingebettet, derart, daß ein Wasserzeichen-Extraktor für jede Datensequenz-Korrelationsspitze die Synchronisationsinformationen, d.h. den Null-Zeitpunkt mitliefert, so daß dieser Null-Zeitpunkt nicht extern bereitgestellt werden muß bzw. durch komplizierte Vereinbarungen zwischen einem Wasserzeichen-Einbetter und einem Wasserzeichen-Extraktor. Insbesondere für die Versuche der unerlaubten Modifikation des Wasserzeichens sind solche externen Vereinbarungen ein Angriffspunkt, der durch das erfindungsgemäße Konzept ausgeräumt wird. Damit ergibt sich ein robustes Wasserzeichenkonzept, das zugleich die Vorteile der hohen Datenrate, die die Pulsphasenmodulation mit sich bringt, ermöglicht.

Ein Vorteil der vorliegenden Erfindung besteht darin, daß das erfindungsgemäße Wasserzeichenkonzept eine Vervielfachung der Datenrate um einen Faktor N gegenüber einer BPSK-Modulation ermöglicht, der von der maximal zu erzeugenden zeitlichen Verschiebung zwischen einer Datensequenz und einer Synchronisationsfrequenz abhängt.

Ein weiterer Vorteil der vorliegenden Erfindung besteht darin, daß aufgrund der hohen Datenrate nunmehr von der digitalen Nachrichtenübertragung bekannte Vorwärtsfehlerkorrektur-Konzepte (FEC-Konzepte; FEC = Forward Error Correction) eingesetzt werden können, die durch Hinzufügung von Redundanz im Sender (Einbetter) eine Fehlerkorrektur im Empfänger (Extraktor) ermöglichen.

Ein weiterer Vorteil der vorliegenden Erfindung besteht darin, daß eine Rückwärtskompatibilität zur Standard-BPSK-Wasserzeicheneinbettung gegeben ist, da die Synchronisationssequenz-Korrelationsspitze den üblichen BPSK-Korrelationsspitzen entsprechen und ebenfalls hinsichtlich ihrer Polarität moduliert werden können, um zusätzlich Informationen zu tragen.

Ein weiterer Vorteil der vorliegenden Erfindung besteht darin, daß keine Änderung der psychoakustischen Parameter zur Gewichtung der Pseudozufallssequenz erforderlich ist. In anderen Worten ausgedrückt hat das erfindungsgemäße Konzept den Vorteil, daß es unabhängig davon ist, ob die Kombination des gewichteten Wasserzeichensignals und des Informationssignals, also das Zusammenführen von Wasserzeichen und Informationssignal, im Zeitbereich oder im Frequenzbereich stattfindet.

Das erfindungsgemäße Konzept eröffnet ferner die Möglichkeit, die Wasserzeichendatenrate durch Hinzufügung weiterer Datensignale zu steigern. Indem eine Synchronisationsequenz nicht nur mit einer Datensequenz, sondern mit mehreren Datensequenzen kombiniert wird, kann im Wasserzeichen-Extraktor eine Synchronisationssequenz-Korrelationsspitze dazu verwendet werden, nicht nur Synchronisationsinformationen für eine Datensequenz-Korrelationsspitze sondern für mehrere Datensequenz-Korrelationsspitzen zu liefern.

Bei einem alternativen Ausführungsbeispiel der vorliegenden Erfindung ist die Synchronisationssequenz zu der Datensequenz identisch, so daß im Wasserzeichen-Extraktor lediglich ein Korrelator benötigt wird.

Bei einem weiteren bevorzugten Ausführungsbeispiel der vorliegenden Erfindung unterscheiden sich Synchronisationssequenz und Datensequenz, was den Vorteil hat, daß im Wasserzeichen-Extraktor die Unterscheidung zwischen einer Synchronisationssequenz-Korrelationsspitze und einer Datensequenz-Korrelationsspitze einfacher ist, da schon a priori bekannt ist, von welchem Korrelator eine Datensequenz-Korrelationsspitze bzw. eine Synchronisationssequenz-Korrelationsspitze geliefert wird.

Die zeitliche Rasterung zum Codieren der Informationen über die zeitliche Verschiebung zwischen den beiden Sequenzen bzw. Korrelationsspitzen wird bei einem bevorzugten Ausführungsbeispiel der vorliegenden Erfindung größer als ein Chip gemacht, wodurch sich eine Robustheit gegenüber zeitlicher Veränderung des Audiosignals beispielsweise durch eine Abtastratenumwandlung, erhöht.

Die Korrelationsspitzen aufgrund der Synchronisationssequenz und/oder der Datensequenz können zusätzlich auch BPSK-moduliert sein. Dadurch ergibt sich eine Rückwärtskompatibilität zur klassischen BPSK-Modulation, und die Datenrate wird noch um weitere zwei Datenkanäle mit einer - wenn auch geringen - Datenrate von einem Bit pro Sequenz erhöht.

Falls Datenworte zu übertragen sind, die eine größere Anzahl von Bits haben als durch eine Datensequenz übertragbar ist, ist eine Rahmensynchronisation dahin gehend notwendig, daß im Wasserzeichen-Extraktor festgestellt werden kann, welche Gruppen aus Synchronisationssequenz-Korrelationsspitze und Datensequenz-Korrelationsspitze zusammengehören, um ein solch langes Datenwort zu ergeben. Bei einem bevorzugten Ausführungsbeispiel der vorliegenden Erfindung wird es bevorzugt, die Synchronisationssequenzen entsprechend zu modulieren, so daß keine eigenen "Frame-Synchronisationssequenzen" im Wasserzeichen-Datenstrom mehr benötigt werden, was unmittelbar zu einem Ansteigen der Nettodatenrate im Wasserzeichenkanal führt, da die sonst üblichen Synchronisationswörter entfallen.

Bei einem weiteren bevorzugten Ausführungsbeispiel der vorliegenden Erfindung wird das Verhältnis zwischen der Leistung einer Datensequenz-Korrelationsspitze und einer Synchronisation-Korrelationsspitze nicht gleich zu 1 gewählt, sondern je nach Anwendungsfall in Richtung der Synchronisationssequenz-Korrelationsspitze oder der Datensequenz-Korrelationsspitze verschoben, was dadurch erreicht werden kann, daß vor der Kombination der Synchronisationssequenz mit der Datensequenz zumindest eine der beiden Sequenzen mit einem Faktor ungleich 1 gewichtet wird. Damit existiert die Möglichkeit, das Energieverhältnis zwischen Synchronisationsenergie und Datenenergie an verschiedene Robustheitsanforderungen anzupassen, oder eine Priorisierung der zwei Layer (Datenlayer und Synchronisationslayer) im Bezug auf die Robustheit einzustellen.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Prinzipblockschaltbild einer erfindungsgemäßen Vorrichtung zum Einbetten von Wasserzeicheninformationen in ein Informationssignal;
- Fig. 2: ein Prinzipblockschaltbild einer erfindungsgemäßen Vorrichtung zum Extrahieren von Wasserzeicheninformationen aus einem Informationssignal;
- Fig. 3: eine Darstellung zur Erläuterung der Funktionsweise der Einrichtung zum Erzeugen einer zeitlichen Verschiebung und der Kombinationseinrichtung von Fig. 1;
- Fig. 4: eine zeitliche Darstellung von Korrelationsspitzen am Wasserzeichen-Extraktor zur Erläuterung der Funktionsweise des Wasserzeichen-Extraktors von Fig. 2; und
- Fig. 5: eine Blockdarstellung zum Erläutern verschiedener Möglichkeiten zum Aufbereiten eines Nutzdaten-Bitstroms, um die in das Informationssignal einzubettenden Wasserzeicheninformationen zu gewinnen.

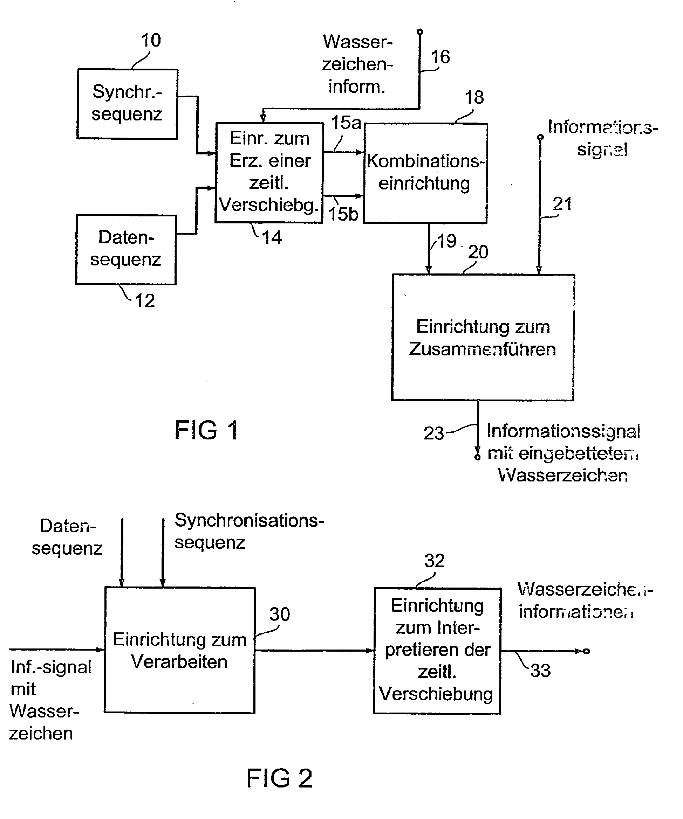

Fig. 1 zeigt ein Prinzipblockschaltbild einer erfindungsgemäßen Vorrichtung zum Einbetten von Wasserzeicheninformationen in ein Informationssignal, das Audio- und/oder Videoinformationen umfaßt. Insbesondere ist eine Einrichtung zum Bereitstellen einer Synchronisationssequenz 10 mit einer Mehrzahl von Synchronisationssequenz-Einheiten und einer Datensequenz 12 mit einer Mehrzahl von Datensequenz-Einheiten vorgesehen, wobei die Synchronisationssequenz und die Datensequenz unter Verwendung einer Einrichtung 14 zum Erzeugen einer zeitlichen Verschiebung derart bereitgestellt werden, daß zwischen der Datensequenz und der Synchronisationssequenz eine zeitliche Verschiebung größer oder gleich Null vorhanden ist, wobei ein Grad dieser zeitlichen Verschiebung von einzubettenden Wasserzeicheninformationen 16 abhängt. Es sei besonders darauf hingewiesen, daß auch eine zeitliche "Verschiebung" von Null zur Codierung beispielsweise einer Null verwendbar ist.

Eine nachgeschaltete Kombinationseinrichtung 18 ist vorgesehen, um eine Kombinationssequenz mit einer Mehrzahl von Kombinationssequenzeinheiten aus der Synchronisationssequenz und der bezüglich der Synchronisationssequenz verschobenen Datensequenz, welche am Ausgang der Einrichtung 14 über Ausgangsleitungen 15a und 15b geliefert werden, zu erreichen, wobei Kombinationssequenzeinheiten von Synchronisationssequenz-Einheiten und verschobenen Datensequenz-Einheiten abgeleitet sind. Schließlich ist eine Einrichtung 20 zum Zusammenführen der an einer Ausgangsleitung 19 der anliegenden Kombinationssequenz und des Informationssignals, das über einen Eingang 21 bereitgestellt wird, vorhanden, um an einem Ausgang 23 das Informationssignal mit einem eingebetteten Wasserzeichen zu liefern, das von einem in Fig. 2 gezeigten Wasserzeichen-Extraktor zu verarbeiten ist.

Der in Fig. 2 gezeigte Wasserzeichen-Extraktor umfaßt eine Einrichtung 30 zum Verarbeiten des Informationssignals, in das die Wasserzeicheninformationen eingebettet sind, also beispielsweise des an dem Ausgang 23 von Fig. 1 erhaltenen Informationssignals unter Verwendung der Synchronisationssequenz 10 von Fig. 1 und unter Verwendung der Datensequenz 12 von Fig. 1. Die Einrichtung 30 zum Verarbeiten liefert ausgangsseitig eine Synchronisationssequenz-Korrelationsspitze sowie eine Datensequenz-Korrelationsspitze, wobei die Datensequenz-Korrelationsspitze um eine zeitliche Verschiebung hinsichtlich der Synchronisationssequenz-Korrelationsspitze verschoben ist. Eine Einrichtung 32 zum Interpretieren dieser zeitlichen Verschiebung ist vorgesehen, um an einem Ausgang 33 des Wasserzeichen-Extraktors die Wasserzeicheninformationen zurückzugewinnen.

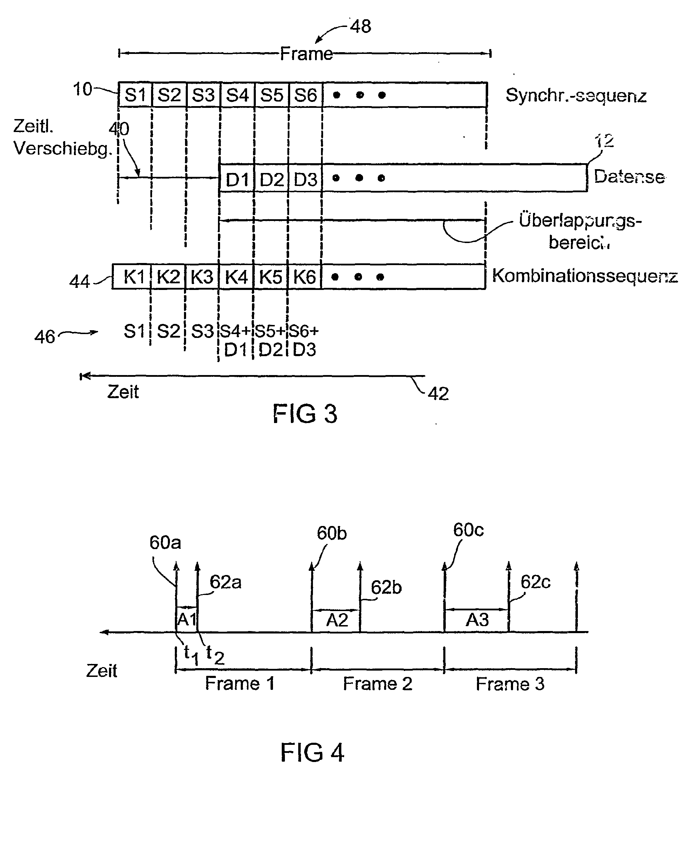

Nachfolgend wird anhand von Fig. 3 auf die Funktionsweise des in Fig. 1 gezeigten Wasserzeichen-Extraktors detaillierter eingegangen. In Fig. 3 ist eine Synchronisationssequenz 10 mit Synchronisationssequenz-Einheiten S1, S2, S3, S4, S5, S6 ... gezeigt. Darüber hinaus ist eine Datensequenz 12 mit Datensequenz-Einheiten D1, D2, D3, ... dargestellt. Die Einrichtung 14 zum Erzeugen einer zeitlichen Verschiebung von Fig. 1 war bereits wirksam, um eine zeitliche Verschiebung 40 zwischen der Synchronisationssequenz 10 und der Datensequenz 12 zu erzeugen, die bei dem in Fig. 3 gezeigten Beispiel drei sogenannte Chips, also Einheiten der beiden Sequenzen, beträgt. Aus einer Zeitachse 42 von Fig. 3 ist ersichtlich, daß die Datensequenz 12 bezüglich der Synchronisationssequenz 10 um drei Chips, also um die zeitliche Verschiebung 40 verzögert worden ist. Alternativ könnte jedoch auch die Synchronisationssequenz bezüglich der Datensequenz verzögert worden sein, solange im Wasserzeichen-Extraktor sichergestellt wird, daß die Zuordnung zwischen einer Synchronisationssequenz und einer (oder mehreren) Datensequenzen geklärt ist.

In Fig. 3 ist ferner eine Kombinationssequenz mit Kombinationssequenz-Einheiten K1, K2, K3, K4, K5, K6, ... gezeigt. Die Kombinationssequenz-Einheiten ergeben sich bei einem bevorzugtem Ausführungsbeispiel der vorliegenden Erfindung durch Addition zeitlich entsprechender Einheiten der Synchronisationssequenz 10 und der Datensequenz 12. Nachdem eine zeitliche Verschiebung um drei Chips bei dem in Fig. 3 gezeigten Beispiel gewählt ist, sind die ersten drei Kombinationssequenz-Einheiten K1, K2, K3 identisch zu den ersten drei Synchronisationssequenz-Einheiten, wie es aus einer Zeile 46 unterhalb der Kombinationssequenz 44 in Fig. 3 ersichtlich ist. Die Kombinationssequenz-Einheit K4 entspricht nun jedoch z. B. der Addition der Synchronisationssequenz-Einheit S4 und der Datensequenz-Einheit D1. Analog hierzu wird die Kombinationssequenz-Einheit K5 bestimmt, die wiederum der Addition der Synchronisationssequenz-Einheit S5 und der Datensequenz-Einheit D2 entspricht. Ähnlich wird zur Berechnung der Kombinationssequenz-Einheit K6 vorgegangen.

Prinzipiell könnte die Länge der Kombinationssequenz im Gegensatz zu dem in Fig. 3 gezeigten Beispiel von der Länge der Synchronisationssequenz abweichen, wenn am Ende der in Fig. 3 gezeigten Kombinationssequenz 44 noch die letzten (in diesem Beispiel drei) Datensequenz-Einheiten angefügt werden würden. Erfindungsgemäß wird es jedoch bevorzugt, eine feste Frame-Länge zu wählen, wobei diese Frame-Länge gleich der Länge der Synchronisationssequenz 10 in Chips ist, derart, daß ein Frame 48 durch die Synchronisationssequenz 10 für diesen Frame unabhängig von den codierten Daten definiert ist.

Nachdem drei Chips der Datensequenz 12 nicht in das Informationssignal eingebettet werden, sondern wie es aus Fig. 3 ersichtlich ist, "weggeworfen" werden, sinkt die Energie der Datensequenz im Informationssignal entsprechend. Daraus ergibt sich bei dem in Fig. 3 gezeigten bevorzugten Ausführungsbeispiel der vorliegenden Erfindung die maximale zur Codierung von Nutzinformationen (Wasserzeicheninformationen) anzuwendende zeitliche Verschiebung 40. Der Maximalabstand M einer Versetzung zweier Sequenzen bestimmt dabei die Anzahl der gleichzeitig übertragenen Bits pro Wasserzeicheninformationssymbol und ergibt sich aus der Bildung des dualen Logarithmus des maximalen Abstands zweier Spitzen in Chips. Wird beispielsweise eine Wortbreite von 8-Bit gewählt, so muß eine maximale zeitliche Verschiebung 40 256 Chips entsprechen.

Als Implementationsbeispiel wird eine Länge der Synchronisationssequenz und der Datensequenz von 4kChips verwendet. Aufgrund des Abschneidens der "überstehenden" Datensequenz-einheiten tritt, wie es ausgeführt worden ist, eine Verschlechterung des Signal/Rausch-Verhältnisses auf, wenn die Datensequenz als Signal betrachtet wird und das Audiosignal, in das die Datensequenz einzufügen ist, als Rauschen betrachtet wird. Eine Verschlechterung dieses Signal/Rausch-Verhältnisses um 3dB aufgrund des Abschneidens der überstehenden Datensequenz-Einheiten würde eine maximale Verschiebung um die Hälfte der Sequenzlänge erlauben, also 2kChips. Mit dieser 3dB-Verschlechterung könnten also ld (2kChips)= 11 Bits codiert werden. Wenn lediglich acht Bits pro Frame 48 codiert werden sollen, ergibt sich somit eine wesentlich kleinere maximale Verschiebung von nur 256 Chips, was wiederum zur Folge hat, daß die S/N-Verschlechterung aufgrund des Abschneidens der überstehenden Chips wesentlich geringer als 3 dB ist.

Wie es bei Fig. 3 dargestellt worden ist, arbeitet die Kombinationseinrichtung 18 von Fig. 1 bei diesem Beispiel lediglich dahin gehend, daß die entsprechenden zeitlich gleichzeitig auftretenden Chips einfach addiert werden. Bei einem alternativen Ausführungsbeispiel der vorliegenden Erfindung muß diese Kombination nicht in einem Verhältnis 1:1 erfolgen. Statt dessen wird vor der Kombination, beispielsweise durch eine Addition, die zu kombinierende Synchronisationssequenz-Einheit und/oder die zu kombinierende Datensequenz-Einheit mit einem Faktor ungleich 1 beaufschlagt, so daß in der Kombinationssequenz entweder die Datensequenz oder die Synchronisationssequenz im Hinblick auf den anderen "Partner" bevorzugt ist. Auf diese Art und Wiese ist es möglich, den Energieverlust durch Abschneiden der überstehenden Datensequenz-Einheiten dahin gehend auszugleichen, daß die noch vorhandenen Datensequenz-Einheiten im Vergleich zu den Synchronisationssequenz-Einheiten vergrößert werden, also mit einem Faktor größer als 1 multipliziert werden, bevor die Kombinationseinrichtung dann die beiden Sequenzen Chip für Chip kombiniert.

Alternativ kann für Anwendungen, bei denen eine besonders hohe Robustheit, also eine besonders hohe Verläßlichkeit der Synchronisationsinformationen erforderlich ist, eine Bevorzugung der Synchronisationssequenz-Einheiten durchgeführt werden, so daß die typischerweise zur Verfügung stehende Energie für das Wasserzeichen mehr zu Gunsten der Synchronisationssequenz verteilt wird, um auf jeden Fall deutliche Synchronisationsspitzen im Wasserzeichen-Extraktor sicherzustellen, während bei der Deutlichkeit der Datensequenz-Korrelationsspitzen unter Umständen gewisse Kompromisse eingegangen werden. In anderen Worten bedeutet dies, daß die Daten- und Synchronisationsspitzen mit unterschiedlichen Energien "gesendet" werden, wobei das Energieverhältnis zwischen der "Synchronisationsenergie" und der "Datenenergie" an Robustheitsanforderungen flexibel anpassbar ist. Damit läßt sich auch eine Priorisierung der Layer (Datenlayer und Synchronisationslayer) in bezug auf die Robustheit einstellen.

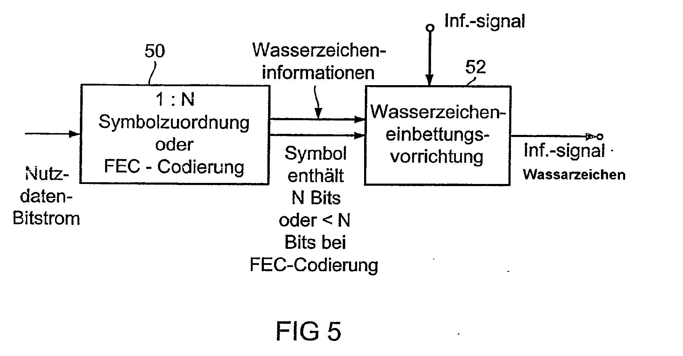

Die Erhöhung der Datenrate um den Faktor N kann auch dazu verwendet werden, die Datenratenerhöhung nicht vollständig für Nutzdaten auszunutzen, sondern z.B. die Nutzdatenrate nur um N/2 zu erhöhen und die anderen N/2-Bits für eine Redundanzcodierung im Sinne einer Vorwärtsfehlerkorrektur durchzuführen. Diese beiden Alternativen sind in Fig. 5 dargestellt. In eine Nutzdaten-Verarbeitungseinrichtung 50 wird ein Nutzdaten-Bitstrom eingespeist. Im ersten Fall führt die Einrichtung 50 eine Seriell/Parallel-Wandlung des Nutzdaten-Bitstroms in ein Wasserzeichen-Informationssymbol durch. Für das 8-Bit-Beispiel, das vorstehend beschrieben worden ist, würde dies bedeuten, daß acht aufeinanderfolgende Nutzdatenbits seriell-parallel gewandelt werden, um eine binäre Zahl zu ergeben, deren Wert einer bestimmten zeitlichen Verschiebung 40 von Fig. 3 entspricht. Dieser bestimmte Wert der zeitlichen Verschiebung stellt dann die Wasserzeicheninformation dar, die mittels der Wasserzeicheneinbettungsvorrichtung von Fig. 1, die in Fig. 5 mit 52 bezeichnet ist, erreicht wird, um unter Verwendung des Informationssignals ein Informationssignal samt eingebettetem Wasserzeichen zu schaffen.

Wird dagegen in der Einrichtung 50 eine Redundanz-Codierung durchgeführt, um eine Vorwärtsfehlerkorrektur zu erreichen, so werden beispielsweise nur vier aufeinanderfolgende Bits des Nutzdaten-Bitstroms zusammengefaßt und mit einem Redundanzcode der Coderate 1/2 codiert, um ein redundantes Wasserzeicheninformationssymbol zu erhalten, das ebenfalls acht Bit hat, und eine Zahl darstellt, der eine bestimmte zeitliche Verschiebung 40 von Fig. 3 zugeordnet wird. In diesem Fall kann in einem Wasserzeichen-Extraktor ein zu diesem Redundanzcode entsprechendes Decodierungsverfahren eingesetzt werden, wie z.B. ein in der Nachrichtentechnik bekanntes Viterbi-Verfahren oder ein anderes auf Wahrscheinlichkeiten basierendes Verfahren.

Im nachfolgenden wird Bezug nehmend auf Fig. 4 auf die Funktionsweise eines erfindungsgemäßen Wasserzeichen-Extraktors Bezug genommen. Fig. 4 zeigt zeitlich aufgetragen eine Folge von drei Frames, wobei jedem Frame bei dem in Fig. 4 gezeigtem Beispiel eine Synchronisations-Korrelationsspitze 60a, 60b, 60c zugeordnet ist, und wobei jeder Frame zusätzlich eine Datensequenz-Korrelationsspitze 62a, 62b bzw. 62c umfaßt. Die Verarbeitungseinrichtung 30 des Wasserzeichen-Extraktors wird zu einem bestimmten Zeitpunkt t1 die Synchronisations-Korrelationsspitze 60a ausgeben und zu einem bestimmten Zeitpunkt t2, der zeitlich nach dem Zeitpunkt t1 liegt, die Datensequenz-Korrelationsspitze 62a ausgeben. Die übertragene Nutzdateninformation steckt in der zeitlichen Differenz A1 zwischen dem Zeitpunkt t2 und dem t1. Die Synchronisationsinformationen der Synchronisations-Korrelationsspitze 60a werden somit beim erfindungsgemäßen Konzept für jeden Frame mitgeliefert, so daß keine externen Synchronisationsvereinbarungen oder ähnliches existieren, die Angriffspunkte darstellen und die zusätzlich die Flexibilität des gesamten Wasserzeichenkonzepts empfindlich beeinträchtigen würden.

Der Wasserzeichen-Extraktor wird für den Frame 2 feststellen, daß die übertragene Nutzinformation eine andere ist, da der zeitliche Abstand A2 zwischen der Synchronisations-Korrelationsspitze 60b und der Datensequenz-Korrelationsspitze 62b ein anderer als im Frame 1 ist. Das selbe trifft für den Frame 3 zu.

Je nach Implementation kann die Synchronisationssequenz 10 von Fig. 1 identisch zur Datensequenz 12 von Fig. 1 sein oder vorzugsweise orthogonal zu dieser. Im Falle identischer Sequenzen weiß ein Wasserzeichen-Extraktor, der z.B. zu einem unbekannten Zeitpunkt mit der Wasserzeichen-Extraktion beginnt, nicht, welche Korrelationsspitze eine Synchronisationssequenz-Korrelationsspitze oder eine Datensequenz-Korrelationsspitze ist. Um dies zu ermitteln, geht der Wasserzeichen-Extraktor erfindungsgemäß derart vor, daß er mehrere Frames, wie z.B. die drei in Fig. 4 gezeigten Frames dekorreliert, um das in Fig. 4 gezeigte Muster von Korrelationsspitzen zu erhalten. Daraufhin ermittelt der Wasserzeichen-Extraktor, ob ein fester Rasterabstand, d.h. die Frame-Länge, zwischen zeitlich beabstandeten Korrelationsspitzen existiert. Auf diese Art und Weise wird der Korrelator feststellen, daß zwischen den Korrelationsspitzen 60a, 60b und 60c ein jeweils gleicher Abstand ist, während dies für die Datensequenz-Korrelationsspitzen im allgemeinen nicht gesagt werden kann, da es unwahrscheinlich ist, daß in mehreren Frames die selben Dateninformationen übertragen werden.

Bei einem alternativen Ausführungsbeispiel können die Synchronisationssequenz-Korrelationsspitzen hinsichtlich ihrer Polarität gemäß der üblichen BPSK-Modulation moduliert sein. Dies kann dazu ausgenutzt werden, daß vereinbarungsgemäß sämtliche Synchronisations-Korrelationsspitzen eine negative Polarität haben, während sämtliche Datensequenz-Korrelationsspitzen eine positive Polarität haben. In diesem Fall muß ein Wasserzeichen-Extraktor nicht den vorstehend beschriebenen Rastererkennungsalgorithmus durchführen, sondern kann allein aufgrund der Polarität eines einzigen Peaks sagen, ob es sich hier um eine Synchronisationssequenz-Korrelationsspitze oder eine Datensequenz-Korrelationsspitze handelt.

Im Falle von zueinander orthogonalen Synchronisations- und Datensequenzen muß keine solche Unterscheidung durchgeführt werden, da von vornherein bekannt ist, welcher Korrelator eine Synchronisations-Korrelationsspitze oder eine Daten-Korrelationsspitze liefert.

Die Polarität sowohl der Synchronisationssequenz-Korrelationsspitzen 60a-60c als auch der Datensequenz-Korrelationsspitzen 62a-62c kann ferner dahin gehend ausgenutzt werden, um zwei weitere Informationskanäle unterzubringen, deren Informationen dadurch übertragen werden, daß eine Spitze entweder positiv oder negativ ist.

Falls Informationswörter im Nutzdaten-Bitstrom von Fig. 5 existieren, die länger als z.B. acht Bits sind, so können diese Wörter, wenn sie beispielsweise 24 Bits lang sind, ohne weiteres in drei aufeinanderfolgende Wasserzeichen-Informationssymbole mit jeweils acht Bits aufgeteilt werden und beispielsweise in den drei in Fig. 4 gezeigten Frames nacheinander übertragen werden. In diesem Fall steht der Wasserzeichen-Korrelator vor der Aufgabe, zu erkennen, welche drei aufeinanderfolgende Frames zusammengehören und zusammen das 24-Bit-Datenwort bilden. Diese Information, also gewissermaßen die "Nutzdaten-Synchronisation" kann ebenfalls ohne weiteres mittels der Polarität beispielsweise des Synchronisationssequenz-Korrelationspeaks erreicht werden. Vereinbarungsgemäß könnte beispielsweise der erste Synchronisationssequenz-Korrelationspeak einer Folge von drei Frames, die zusammen ein Nutdaten-Informationswort bilden, eine Polarität haben, die von den beiden anderen Frames abweicht. Für diesen Fall können auch aufwendigere und sicherere Synchronisationssequenz-Spitzen-Modulationskonzepte eingesetzt werden, die nicht nur die Frames umfassen, die zu einem Informationswort gehören, sondern die sich über mehrere aufeinanderfolgende Informationswörter erstrecken.

Aufgrund der Tatsache, daß die Chips einer Kombinationssequenz in der Einrichtung 20 zum Zusammenführen zu z. B. zeitdiskreten Abtastwerten des Informationssignals hinzuaddiert werden, kann eine Abtastratenumwandlung (Resampling) durch einen Angreifer dazu führen, daß ein Korrelator die zeitlichen Abstände zwischen einer Synchronisationsspitze und einer Datenspitze nicht mehr exakt erkennt, sondern daß diese zeitlichen Abstände insgesamt kleiner oder größer werden, je nachdem, ob die Abtastrate des Audiostücks höher oder niedriger als ursprünglich vorgesehen gewählt wird. Um gegen solche Angriffe eine höhere Robustheit zu erreichen, wird es bevorzugt, das Codierungsraster, d.h. die Zuordnung einer zeitlichen Verschiebung zu einem Wasserzeicheninformationssymbol nicht in einem Raster mit kleinstmöglichem Rasterabstand, d.h. einer Sequenzeinheit oder einem Chip, zu wählen, sondern ein größeres Codierungsraster zu nehmen, das beispielsweise zwei, drei oder mehr Chips umfaßt. Selbstverständlich sinkt dadurch die Datenrate um die Hälfte, wenn beispielsweise ein 2-Chip-Raster eingesetzt wird, oder drittelt sich sogar die Datenrate, wenn ein 3-Chip-Raster verwendet wird. Aufgrund des hohen Datenratengewinns durch die erfindungsgemäße Puls-Phasen-Modulation mit zusätzlicher Synchronisationsspitzenübertragung sind solche Datenratenverluste im Sinne einer besseren Robustheit jedoch oftmals hinnehmbar. An dieser Stelle zeigt sich, daß das erfindungsgemäße Konzept sehr flexibel ist, dahin gehend, daß Robustheit einerseits und Datenrate andererseits aufeinander abgestimmt werden können und für jede spezielle Anwendung individuell optimal angepaßt werden können.

Abhängig von den Gegebenheiten kann das erfindungsgemäße Wasserzeicheneinbettungsverfahren oder das erfindungsgemäße Wasserzeichenextraktionsverfahren in Hardware oder in Software implementiert werden. Die Implementation kann auf einem digitalen Speichermedium, insbesondere einer Diskette oder CD, mit elektronisch auslesbaren Steuersignalen erfogen, die so mit einem programmierbaren Computersystem zusammenwirken könne, dass das entsprechende Verfahren ausgeführt wird. Allgemein besteht die Erfindung somit auch in einem Computer-Programm-Produkt mit auf einem maschinenlesbaren Träger gespeicherten Programmcode zur Durchführung der erfindungsgemäßen Verfahren, wenn das Computer-Programm-Produkt auf einem Rechner abläuft. In anderen Worten ausgedrückt kann die Erfindung somit als ein Computer-Programm mit einem Programmcode zur Durchführung der Verfahren realisiert werden, wenn das Computer-Programm auf einem Computer abläuft.

## Patentansprüche

1. Vorrichtung zum Einbetten von Wasserzeicheninformationen (16) in ein Informationssignal (21), das Audio- und/oder Videoinformationen umfaßt, mit folgenden Merkmalen:
einer Einrichtung (10, 12, 14) zum Bereitstellen einer Synchronisationssequenz mit einer Mehrzahl von Synchronisationssequenz-Einheiten und einer Datensequenz mit einer Mehrzahl von Datensequenz-Einheiten, wobei zwischen der Datensequenz und der Synchronisationssequenz eine zeitliche Verschiebung größer oder gleich Null vorhanden ist, und wobei ein Grad der Verschiebung von den Wasserzeicheninformationen (16) abhängt;
einer Kombinationseinrichtung (18) zum Erzeugen einer Kombinationssequenz mit einer Mehrzahl von Kombinationssequenz-Einheiten aus der Synchronisationssequenz und der bezüglich der Synchronisationssequenz verschobenen Datensequenz, wobei Kombinationssequenz-Einheiten von Synchronisationssequenz-Einheiten und verschobenen Datensequenz-Einheiten abgeleitet sind; und
einer Einrichtung (20) zum Zusammenführen der Kombinationssequenz und des Informationssignals, um die Wasserzeicheninformationen in das Informationssignal einzubetten.

2. Vorrichtung, nach Anspruch 1,
bei der die Einrichtung (10, 12, 14) zum Bereitstellen ausgebildet ist, um eine Datensequenz bereitzustellen, die zu der Synchronisationssequenz identisch ist oder zu der Synchronisationssequenz unterschiedlich und vorzugsweise orthogonal ist.

3. Vorrichtung nach Anspruch 1 oder 2,
bei der die Synchronisationssequenz und die Datensequenz Pseudozufallssequenzen sind.

4. Vorrichtung nach einem der Ansprüche 1 bis 3,
bei der die Einrichtung (10, 12, 14) zum Bereitstellen ausgebildet ist, um die Synchronisationssequenz und die Datensequenz mit identischer Länge bereitzustellen.

5. Vorrichtung nach einem der Ansprüche 1 bis 4,
bei der die Kombinationseinrichtung (18) ausgebildet ist, um Synchronisationssequenz-Einheiten und Datensequenz-Einheiten in einem zeitlichen Überlappungsbereich zu addieren.

6. Vorrichtung nach einem der Ansprüche 1 bis 5,
bei der die Kombinationseinrichtung ausgebildet ist, um Datensequenz-Einheiten vor einer Kombination mit überlappenden Synchronisationssequenz-Einheiten gegenüber den Synchronisationssequenz-Einheiten zu vergrößern oder zu verkleinern.

7. Vorrichtung nach einem der Ansprüche 1 bis 6,
bei der die Kombinationseinrichtung (18) ausgebildet ist, um die Kombinationssequenz mit einer Länge zu erzeugen, die gleich der Länge der Synchronisationssequenz ist, wobei Datensequenz-Einheiten, die nicht mit Synchronisationssequenz-Einheiten zeitlich überlappen, nicht Teil der Kombinationssequenz sind.

8. Vorrichtung nach einem der vorhergehenden Ansprüche,
bei der die Einrichtung (10, 12, 14) zum Bereitstellen ausgebildet ist, um die Verschiebung maximal auf eine halbe Länge der Synchronisationssequenz einzustellen.

9. Vorrichtung nach einem der vorhergehenden Ansprüche,
die ferner einen Redundanzcodierer (50) aufweist, um für eine Vorwärtsfehlerkorrektur Nutzdaten zu codieren, um die Wasserzeicheninformationen zu erhalten, die gegenüber den Nutzdaten eine höhere Informations-Redundanz aufweisen.

10. Vorrichtung nach einem der vorhergehenden Ansprüche,
bei der die Einrichtung (10, 12, 14) zum Bereitstellen ausgebildet ist, um eine zeitliche Verschiebung zwischen der Datensequenz und der Synchronisationssequenz in einem zeitlichen Raster durchzuführen, dessen Rasterabstand ein Vielfaches einer Synchronisationssequenz-Einheit beträgt.

11. Vorrichtung nach einem der Ansprüche 1 bis 10,
bei dem die Synchronisationssequenz und/oder die Datensequenz abhängig von einem weiteren Datenkanal hinsichtlich einer Polarität derselben codiert ist/sind.

12. Vorrichtung nach einem der vorhergehenden Ansprüche,
bei der die Einrichtung (20) zum Zusammenführen ausgebildet ist, um die Kombinationssequenz so zu gewichten, daß ihre Energie im wesentlichen unterhalb einer psychoakustischen oder psychooptischen Maskierungsschwelle liegt.

13. Vorrichtung nach einem der Ansprüche 1 bis 12,
bei der die Wasserzeicheninformationen binär sind und ein Informationswort aufweisen, das mehr Bits umfaßt als durch die zeitliche Verschiebung zwischen der Datensequenz und der Synchronisationssequenz zu codieren sind,
bei der eine Mehrzahl aufeinanderfolgender Synchronisationssequenzen und zugeordneter Datensequenzen verwendbar sind, um das gesamte Informationswort zu verarbeiten, und
bei der ferner eine Synchronisationssequenzmodulationsvorrichtung vorhanden ist, um die aufeinanderfolgenden Synchronisationssequenzen so zu modulieren, daß in einem Wasserzeichen-Extraktor ermittelbar ist, welche Synchronisationssequenzen und zugeordnete Datensequenzen zusammen das Informationswort darstellen.

14. Verfahren zum Einbetten von Wasserzeicheninformationen (16) in ein Informationssignal (21), das Audio- und/oder Videoinformationen umfaßt, mit folgenden Schritten:
Bereitstellen (10, 12, 14) einer Synchronisationssequenz mit einer Mehrzahl von Synchronisationssequenz-Einheiten und einer Datensequenz mit einer Mehrzahl von Datensequenz-Einheiten, wobei zwischen der Datensequenz und der Synchronisationssequenz eine zeitliche Verschiebung größer oder gleich Null vorhanden ist, und wobei ein Grad der Verschiebung von den Wasserzeicheninformationen (16) abhängt;
Erzeugen (18) einer Kombinationssequenz mit einer Mehrzahl von Kombinationssequenz-Einheiten aus der Synchronisationssequenz und der bezüglich der Synchronisationssequenz verschobenen Datensequenz, wobei Kombinationssequenz-Einheiten von Synchronisationssequenz-Einheiten und verschobenen Datensequenz-Einheiten abgeleitet sind; und
Zusammenführen (20) der Kombinationssequenz und des Informationssignals, um die Wasserzeicheninformationen in das Informationssignal einzubetten.

15. Vorrichtung zum Extrahieren von in einem Informationssignal, das Audio- und/oder Videoinformationen aufweist, eingebetteten Wasserzeicheninformationen, wobei die Wasserzeicheninformationen unter Verwendung einer Synchronisationssequenz (10) und einer Datensequenz (12) eingebettet sind, und wobei eine zeitliche Verschiebung (40) größer oder gleich Null zwischen der Synchronisationssequenz (10) und der Datensequenz (12) auf die eingebetteten Wasserzeicheninformationen hinweist, mit folgenden Merkmalen:
einer Einrichtung (30)zum Verarbeiten des Informationssignals, in dem die Wasserzeicheninformationen eingebettet sind, unter Verwendung der Synchronisationssequenz, um eine Synchronisations-Korrelationsspitze (60a, 60b, 60c) zu erhalten, und unter Verwendung der Datensequenz (12), um eine Datensequenz-Korrelationsspitze (62a, 62b, 62c) zu erhalten, wobei die Datensequenz-Korrelationsspitze um eine zeitliche Verschiebung (A1, A2, A3) abweichend von der Synchronisationssequenz-Korrelationsspitze auftritt; und
einer Einrichtung (32) zum Interpretieren der zeitlichen Verschiebung (A1, A2, A3), um die Wasserzeicheninformationen rückzugewinnen.

16. Vorrichtung nach Anspruch 15,
bei der ferner in Polaritäten der Synchronisationssequenz-Korrelationsspitzen und/oder in Polaritäten der Datensequenz-Korrelationsspitzen weitere Informationen codiert sind, wobei die Einrichtung (32) zum Interpretieren ferner ausgebildet ist, um eine Polarität der Synchronisationssequenz-Korrelationsspitzen und/oder eine Polarität der Datensequenz-Korrelationsspitzen auszuwerten.

17. Vorrichtung nach Anspruch 15 oder 16, bei der die Synchronisationssequenz von der Datensequenz unterschiedlich ist, und
bei der die Einrichtung (30) zum Verarbeiten ausgebildet ist, um unter Verwendung der Synchronisationssequenz die Synchronisationssequenz-Korrelationsspitze zu erzeugen, und um unter Verwendung der Datensequenz die Datensequenz-Korrelationsspitze zu erzeugen.

18. Vorrichtung nach Anspruch 15 oder 16,
bei der die Synchronisationssequenz und die Datensequenz identisch oder ähnlich sind, und
bei der die Einrichtung (30) zum Verarbeiten ferner ausgebildet ist, um unter Verwendung von mehreren Datensequenz-Korrelationsspitzen und Synchronisationssequenz-Korrelationsspitzen die Synchronisations-Korrelationsspitzen von den Datensequenz-Korrelationsspitzen zu unterscheiden, indem die Korrelationsspitzen als Synchronisationssequenz-Korrelationsspitzen erkannt werden, die zueinander einen jeweils im wesentlichen gleichen Abstand haben.

19. Vorrichtung nach Anspruch 15 oder 16,
bei der die Synchronisationssequenz und die Datensequenz identisch oder ähnlich sind, und bei der die Synchronisationssequenz-Korrelationsspitze eine andere Polarität als die Datensequenz-Korrelationsspitze hat, und
bei der die Einrichtung (30) zum Verarbeiten ausgebildet ist, um aufgrund der Polarität einer Korrelationsspitze zu ermitteln, ob es sich um eine Datensequenz-Korrelationsspitze oder eine Synchronisationssequenz-Korrelationsspitze handelt.

20. Vorrichtung nach einem der Ansprüche 15 bis 19, wobei die Wasserzeicheninformationen binär sind und ein Informationswort aufweisen, das mehr Bit umfaßt als durch die zeitliche Verschiebung zwischen der Datensequenz und der Synchronisationssequenz zu codieren sind, wobei eine Mehrzahl aufeinanderfolgender Synchronisationssequenzen und zugeordneter Datensequenzen verwendbar ist, um das gesamte Informationswort einzubetten, und wobei die aufeinanderfolgenden Synchronisationssequenzen so moduliert worden sind, daß ermittelbar ist, welche Synchronisationssequenzen und zugeordneten Datensequenzen zusammen das Informationswort darstellen,
bei der die Einrichtung zum Interpretieren (32) ausgebildet ist, um eine Synchronisationssequenz-Demodulation durchzuführen, um zu ermitteln, welche Synchronisationssequenz-Korrelationsspitzen und zugeordnete Datensequenz-Korrelationsspitzen zusammen das Informationswort darstellen.

21. Vorrichtung nach einem der Ansprüche 15 bis 20,
bei der die Wasserzeicheninformationen ferner aus Nutzdateninformationen redundanz-codiert worden sind, und
bei der die Einrichtung (32) zum Interpretieren ausgebildet ist, um eine Decodierung auf der Basis der hinzugefügten Redundanz durchzuführen.

22. Verfahren zum Extrahieren von in einem Informationssignal, das Audio- und/oder Videoinformationen aufweist, eingebetteten Wasserzeicheninformationen, wobei die Wasserzeicheninformationen unter Verwendung einer Synchronisationssequenz (10) und einer Datensequenz (12) eingebettet sind, und wobei eine zeitliche Verschiebung (40) größer oder gleich Null zwischen der Synchronisationssequenz (10) und der Datensequenz (12) auf die eingebetteten Wasserzeicheninformationen hinweist, mit folgenden Schritten:
Verarbeiten (30) des Informationssignals, in dem die Wasserzeicheninformationen eingebettet sind, unter Verwendung der Synchronisationssequenz, um eine Synchronisations-Korrelationsspitze (60a, 60b, 60c) zu erhalten, und unter Verwendung der Datensequenz (12), um eine Datensequenz-Korrelationsspitze (62a, 62b, 62c) zu erhalten, wobei die Datensequenz-Korrelationsspitze um eine zeitliche Verschiebung (A1, A2, A3) abweichend von der Synchronisationssequenz-Korrelationsspitze auftritt; und
Interpretieren (32) der zeitlichen Verschiebung (A1, A2, A3), um die Wasserzeicheninformationen zurückzugewinnen.

23. Computer-Programm mit einem Programmcode zur Durchführung des Verfahrens zum Einbetten von Wasserzeicheninformationen nach Anspruch 14, wenn das Computer-Programm auf einem Computer abläuft.

24. Computer-Programm mit einem Programmcode zur Durchführung des Verfahrens zum Extrahieren von Wasserzeicheninformationen nach Anspruch 22, wenn das Computer-Programm auf einem Computer abläuft.

## Claims

1. A device for embedding watermark information (16) into an information signal (21) including audio and/or video information, comprising:
means (10, 12, 14) for providing a synchronization sequence with a plurality of synchronization sequence units and a data sequence with a plurality of data sequence units, wherein between the data sequence and the synchronization sequence a time shift larger than or equal to zero is present and wherein a degree of the shift depends on the watermark information (16);
combination means (18) for generating a combination sequence having a plurality of combination sequence units from the synchronization sequence and the data sequence shifted with regard to the synchronization sequence, wherein combination sequence units are derived from synchronization sequence units and shifted data sequence units; and
means (20) for combining the combination sequence and the information signal in order to embed the watermark information into the information signal.

2. The device according to claim 1,
wherein means (10, 12, 14) is implemented for providing, in order to provide a data sequence which is identical to the synchronization sequence or different from the synchronization sequence and preferably orthogonal.

3. The device according to claim 1 or 2,
wherein the synchronization sequence and the data sequence are pseudo random sequences.

4. The device according to one of claims 1 to 3,
wherein means (10, 12, 14) for providing is implemented in order to provide the synchronization sequence and the data sequence with an identical length.

5. The device according to one of claims 1 to 4,
wherein combination means (18) is implemented to add synchronization sequence units and data sequence units within an overlapping area in time.

6. The device according to one of claims 1 to 5,
wherein combination means is implemented to enlarge or reduce data sequence units before a combination with overlapping synchronization sequence units compared to the synchronization sequence units.

7. The device according to one of claims 1 to 6,
wherein combination means (18) is implemented in order to generate the combination sequence having a length which is equal to the length of the synchronization sequence, wherein data sequence units which are not overlapping in time with the synchronization sequence units are not part of the combination sequence.

8. The device according to one of the preceding claims,
wherein means (10, 12, 14) for providing is implemented in order to set the shift at maximum to half a length of the synchronization sequence.

9. The device according to one of the preceding claims,
further comprising a redundancy encoder (50) in order to encode payload data for a forward error correction in order to obtain the watermark information having a higher information redundancy compared to the payload data.

10. The device according to one of the preceding claims,
wherein means (10, 12, 14) for providing is implemented in order to perform a time shift between the data sequence and the synchronization sequence in a time raster whose raster distance amounts to a manifold of a synchronization sequence unit.

11. The device according to one of claims 1 to 10,
wherein the synchronization sequence and/or the data sequence is/are encoded depending on a further data channel with regard to a polarity of the same.

12. The device according to one of the preceding claims,
wherein means (20) for combining is implemented in order to weight a combination sequence so that its energy lies generally below a psychoacoustic or a psychooptic masking threshold.

13. The device according to one of claims 1 to 12,
wherein the watermark information is binary and comprises an information word including more bits than are to be encoded by the time shift between the data sequence and the synchronization sequence,
wherein a plurality of consecutive synchronization sequences and associated data sequences are applicable to process the whole information word, and
wherein further a synchronization sequence modulation device is present in order to modulate the consecutive synchronization sequences so that it may be determined within a watermark extractor which synchronization sequences and associated data sequences together illustrate the information word.

14. A method for embedding watermark information (16) into an information signal (21) including audio and/or video information, comprising:
providing (10, 12, 14) a synchronization sequence with a plurality of synchronization sequence units and a data sequence with a plurality of data sequence units,
wherein between the data sequence and the synchronization sequence a time shift larger than or equal to zero is present and wherein one degree of the shift depends on the watermark information (16);
generating (18) a combination sequence with a plurality of combination sequence units from the synchronization sequence and the data sequence shifted with regard to the synchronization sequence, wherein combination sequence units are derived from synchronization sequence units and shifted data sequence units; and
combining (20) the combination sequence and the information signal in order to embed the watermark information into the information signal.

15. A device for extracting of watermark information embedded into an information signal comprising audio and/or video information, wherein the watermark information is embedded using a synchronization sequence (10) and a data sequence (12) and wherein a time shift (40) larger than or equal to zero between the synchronization sequence (10) and the data sequence (12) indicates the embedded watermark information, comprising:
means (30) for processing the information signal in which the watermark information is embedded, using the synchronization sequence, in order to obtain a synchronization correlation peak (60a, 60b, 60c) and using the data sequence (12) in order to obtain a data sequence correlation peak (62a, 62b, 62c), wherein the data sequence correlation peak occurs deviating from the synchronization sequence correlation peak by a time shift (A1, A2, A3); and
means (32) for interpreting the time shift (A1, A2, A3) in order to recover the watermark information.

16. The device according to claim 15,
wherein further in polarities of the synchronization sequence correlation peaks and/or in polarities of the data sequence correlation peaks further information is encoded, wherein means (32) for interpreting is further implemented in order to evaluate a polarity of the synchronization sequence correlation peaks and/or a polarity of the data sequence correlation peaks.

17. The device according to claim 15 or 16,
wherein the synchronization sequence is different from the data sequence, and
wherein means (30) for processing is implemented in order to generate the synchronization sequence correlation peak using the synchronization sequence and in order to generate the data sequence correlation peak using the data sequence.

18. The device according to claim 15 or 16,
wherein the synchronization sequence and the data sequence are identical or similar, and
wherein means (30) for processing is further implemented in order to differentiate synchronization correlation peaks from data sequence correlation peaks using several data sequence correlation peaks and synchronization sequence correlation peaks by recognizing the correlation peaks as synchronization sequence correlation peaks which have a basically unique distance to each other.

19. The device according to claim 15 or 16,
wherein the synchronization sequence and the data sequence are identical or similar and wherein the synchronization sequence correlation peak has another polarity than the data sequence correlation peak, and
wherein means (30) for processing is implemented to determine based on the polarity of a correlation peak whether it is a data sequence correlation peak or a synchronization sequence correlation peak.

20. The device according to one of claims 15 to 19,
wherein watermark information is binary and comprises an information word including more bits than are to be encoded by the time shift between the data sequence and the synchronization sequence, wherein a plurality of consecutive synchronization sequences and associated data sequences may be used to embed the whole information word, and wherein the consecutive synchronization sequences were modulated so that it may be determined which synchronization sequences and associated data sequences together represent the information word,
wherein means for interpreting (32) is implemented in order to perform a synchronization sequence demodulation in order to determine which synchronization sequence correlation peaks and associated data sequence correlation peaks together represent the information word.

21. The device according to one of claims 15 to 20,
wherein the watermark information was further redundancy encoded from payload data information, and
wherein means (32) for interpreting is implemented in order to perform a decoding on the basis of the added redundancy.

22. A method for extracting of watermark information embedded into an information signal comprising audio and/or video information, wherein the watermark information is embedded using a synchronization sequence (10) and a data sequence (12), and wherein a time shift (40) larger than or equal to zero between the synchronization sequence (10) and the data sequence (12) indicates the embedded watermark information, comprising:
processing (30) the information signal in which the watermark information is embedded, using the synchronization sequence in order to obtain a synchronization correlation peak (60a, 60b, 60c) and using the data sequence (12) in order to obtain a data sequence correlation peak (62a, 62b, 62c), wherein the data sequence correlation peak occurs deviating from the synchronization sequence correlation peak by a time shift (A1, A2, A3); and
interpreting (32) the time shift (A1, A2, A3) in order to recover the watermark information.

23. Computer program having a program code for performing the method for embedding watermark information according to claim 14, when the computer program runs on a computer.

24. Computer program having a program code for performing the method for extracting watermark information according to claim 22 when the computer program runs on a computer.

## Revendications

1. Dispositif pour insérer des informations de filigrane (16) dans un signal d'information (21) comportant des informations audio et/ou vidéo, aux caractéristiques suivantes :
un dispositif (10, 12, 14) destiné à préparer une séquence de synchronisation avec une pluralité d'unités de séquences de synchronisation et une séquence de données avec une pluralité d'unités de séquence de données, entre la séquence de données et la séquence de synchronisation étant présent un décalage dans le temps supérieur ou égal à zéro, et un degré du décalage étant fonction des informations de filigrane (16) ;
un dispositif de combinaison (18) destiné à générer une séquence de combinaison avec une pluralité d'unités de séquence de combinaison à partir de la séquence de synchronisation et de la séquence de données décalée par rapport à la séquence de synchronisation, les unités de séquence de combinaison étant dérivées des unités de séquence de synchronisation et des unités de séquence de données décalées ; et
un dispositif (20) destiné à réunir la séquence de combinaison et le signal d'information, pour insérer les informations de filigrane dans le signal d'information.

2. Dispositif selon la revendication 1,
dans lequel le dispositif (10, 12, 14) destiné à préparer est réalisé de manière à préparer une séquence de données qui est identique à la séquence de synchronisation ou qui est différente de la séquence de synchronisation et, de préférence, orthogonale à cette dernière.

3. Dispositif selon la revendication 1 ou 2,
dans lequel la séquence de synchronisation et la séquence de données sont des séquences pseudo-aléatoires.

4. Dispositif selon l'une des revendications 1 à 3,
dans lequel le dispositif (10, 12, 14) destiné à préparer est réalisé de manière à préparer la séquence de synchronisation et la séquence de données avec une longueur identique.

5. Dispositif selon l'une des revendications 1 à 4,
dans lequel le dispositif de combinaison (18) est réalisé de manière à additionner les unités de séquence de synchronisation et les unités de séquence de données dans une zone de recouvrement dans le temps.

6. Dispositif selon l'une des revendications 1 à 5,
dans lequel le dispositif de combinaison est réalisé de manière à augmenter ou diminuer les unités de séquence de données avant une combinaison avec des unités de séquence de synchronisation venant en recouvrement, par rapport aux unités de séquence de synchronisation.

7. Dispositif selon l'une des revendications 1 à 6,
dans lequel le dispositif de combinaison (18) est réalisé de manière à générer la séquence de combinaison avec une longueur qui est égale à la longueur de la séquence de synchronisation, les unités de séquence de données qui ne viennent pas en recouvrement dans le temps avec des unités de séquence de synchronisation ne faisant pas partie de la séquence de combinaison.

8. Dispositif selon l'une des revendications précédentes,
dans lequel le dispositif (10, 12, 14) destiné à préparer est réalisé de manière à régler le décalage au maximum à une demi-longueur de la séquence de synchronisation.

9. Dispositif selon l'une des revendications précédentes,
présentant, par ailleurs un codeur à redondance (50) destiné à coder des données utiles pour une correction d'erreur directe, pour obtenir les informations de filigrane qui présentent une redondance d'informations supérieure par rapport aux données utiles.

10. Dispositif selon l'une des revendications précédentes,
dans lequel le dispositif (10, 12, 14) pour préparer est réalisé de manière à effectuer un décalage dans le temps entre la séquence de données et la séquence de synchronisation dans une trame dans le temps dont la distance de trame est d'un multiple d'une unité de séquence de synchronisation.

11. Dispositif selon l'une des revendications 1 à 10,
dans lequel la séquence de synchronisation et/ou la séquence de données est ou sont codées en fonction d'un autre canal de données quant à une polarité de celles-ci.

12. Dispositif selon l'une des revendications précédentes,
dans lequel le dispositif (20) pour réunir est réalisé de manière à pondérer la séquence de combinaison de sorte que son énergie se situe sensiblement au-dessous d'un seuil de masquage psycho-acoustique ou psycho-optique.

13. Dispositif selon l'une des revendications 1 à 12,
dans lequel les informations de filigrane sont binaires et présentent un mot d'information qui comporte plus de bits que ce qui doit être codé par le décalage dans le temps entre la séquence de données et la séquence de synchronisation,
dans lequel une pluralité de séquences de synchronisation et de séquences de données associées successives peuvent être utilisées pour traiter tout le mot d'information, et
dans lequel est présent, par ailleurs, un dispositif de modulation de séquence de synchronisation, pour moduler les séquences de synchronisation successives de sorte que dans un extracteur de filigrane puissent être déterminées les séquences de synchronisation et les séquences de données associées qui représentent ensemble le mot d'information.

14. Procédé pour l'insertion d'informations de filigrane (16) dans un signal d'information (21) comportant des informations audio et/ou vidéo, aux étapes suivantes consistant à :
préparer (10, 12, 14) une séquence de synchronisation avec une pluralité d'unités de séquence de synchronisation et un séquence de données avec une pluralité d'unités de séquence de données, entre la séquence de données et la séquence de synchronisation étant présent un décalage dans le temps plus grand ou égal zéro, et un degré du décalage étant fonction des informations de filigrane (16) ;
générer (18) une séquence de combinaison avec une pluralité d'unités de séquence de combinaison à partir de la séquence de synchronisation et de la séquence de données décalée par rapport à la séquence de synchronisation, les unités de séquence de combinaison étant dérivées des unités de séquence de synchronisation et des unités de séquence de données décalées ; et
réunir (20) la séquence de combinaison et le signal d'information, pour insérer les informations de filigrane dans le signal d'information.

15. Dispositif pour extraire des informations de filigrane insérées dans un signal d'information présentant des informations audio et/ou vidéo, les informations de filigrane étant insérées à l'aide d'une séquence de synchronisation (10) et d'une séquence de données (12), et un décalage dans le temps (40) plus grand ou égal à zéro entre la séquence de synchronisation (10) et la séquence de données (12) indiquant les informations de filigrane insérées, aux caractéristiques suivantes :
un dispositif (30) destiné à traiter le signal d'information dans lequel sont insérées les informations de filigrane à l'aide de la séquence de synchronisation, pour obtenir une crête de corrélation de synchronisation (60a, 60b, 60c), et à l'aide de la séquence de données (12), pour obtenir une crête de corrélation de séquence de données (62a, 62b, 62c), la crête de corrélation de séquence de données se produisant de manière différant d'un décalage dans le temps (A1, A2, A3) de la crête de corrélation de séquence de synchronisation ; et
un dispositif (32) destiné à interpréter le décalage dans le temps (A1, A2, A3), pour récupérer les informations de filigrane.

16. Dispositif selon la revendication 15,
dans lequel, d'autres informations sont, par ailleurs, codées dans les polarités des crêtes de corrélation de séquence de synchronisation et/ou dans les polarités des crêtes de corrélation de séquence de données, le dispositif (32) destiné à interpréter étant, par ailleurs, réalisé de manière à évaluer une polarité des crêtes de corrélation de séquence de synchronisation et/ou une polarité des crêtes de corrélation de séquence de données.

17. Dispositif selon la revendication 15 ou 16, dans lequel la séquence de synchronisation est différente de la séquence de données, et
dans lequel le dispositif (30) destiné à traiter est réalisé de manière à générer, à l'aide de la séquence de synchronisation, la séquence de corrélation de synchronisation et à générer, à l'aide de la séquence de données, la crête de corrélation de séquence de données.

18. Dispositif selon la revendication 15 ou 16,
dans lequel la séquence de synchronisation et la séquence de données sont identiques ou similaires, et
dans lequel le dispositif (30) destiné à traiter est, par ailleurs, réalisé de manière à différencier, à l'aide de plusieurs crêtes de corrélation de séquence de données et crêtes de corrélation de séquence de synchronisation, les crêtes de corrélation de synchronisation des crêtes de corrélation de séquence de données en identifiant les crêtes de corrélation comme crêtes de corrélation de séquence de synchronisation présentant entre elles une distance chaque fois sensiblement identique.

19. Dispositif selon la revendication 15 ou 16,
dans lequel la séquence de synchronisation et la séquence de données sont identiques ou similaires, et dans lequel la crête de corrélation de séquence de synchronisation a une autre polarité que la crête de corrélation de séquence de données, et
dans lequel le dispositif (30) destiné à traiter est réalisé de manière à déterminer, sur base d'une polarité d'une crête de corrélation, s'il s'agit d'une crête de corrélation de séquence de données ou d'une crête de corrélation de synchronisation.

20. Dispositif selon l'une des revendications 15 à 19, dans lequel les informations de filigrane sont binaires et présentent un mot d'information qui comporte plus de bits que ce qui doit être codé par le décalage dans le temps entre la séquence de données et la séquence de synchronisation, une pluralité de séquences de synchronisation et de séquences de données associées successives pouvant être utilisées pour insérer tout le mot d'information, et les séquences de synchronisation successives étant modulées de sorte que puissent être déterminées les séquences de synchronisation et les séquences de données associées qui représentent ensemble le mot d'information,
dans lequel le dispositif destiné à interpréter (32) est réalisé de manière à effectuer une démodulation de séquence de synchronisation, pour déterminer les crêtes de corrélation de séquence de synchronisation et les crêtes de corrélation de séquence de données associées qui représentent ensemble le mot d'information.

21. Dispositif selon l'une des revendications 15 à 20,
dans lequel les informations de filigrane ont, par ailleurs, été codées avec redondance à partir d'informations de données utiles, et
dans lequel le dispositif (32) destiné à interpréter est réalisé de manière à effectuer un décodage sur base de la redondance ajoutée.

22. Procédé pour extraire des informations de filigrane insérés dans un signal d'information présentant des informations audio et/ou vidéo, les informations de filigrane étant insérées à l'aide d'une séquence de synchronisation (10) et d'une séquence de données (12), et un décalage dans le temps (40) supérieur ou égal à zéro entre la séquence de synchronisation (10) et la séquence de données (12) indiquant les informations de filigrane insérées, aux étapes suivantes consistant à :
traiter (30) le signal d'information dans lequel sont insérées les informations de filigrane, à l'aide de la séquence de synchronisation, pour obtenir une pointe de corrélation de synchronisation (60a, 60b, 60c), et à l'aide de la séquence de données (12), pour obtenir une crête de corrélation de séquence de données (62a, 62b , 62c), la crête de corrélation de séquence de données se présentant différant d'un décalage dans le temps (A1, A2, A3) de la crête de corrélation de séquence de synchronisation ; et
interpréter (32) le décalage dans le temps (A1, A2, A3), pour récupérer les informations de filigrane.

23. Programme d'ordinateur avec un code de programme pour mettre en oeuvre le procédé pour insérer des informations de filigrane selon la revendication 14 lorsque le programme d'ordinateur se déroule sur un ordinateur.

24. Programme d'ordinateur avec un code de programme pour mettre en oeuvre le procédé pour extraire des informations de filigrane selon la revendication 22 lorsque le programme d'ordinateur se déroule sur un ordinateur.
